# EUROPÄISCHE PATENTANMELDUNG

(11) **EP 3 875 819 A1**
(43) Veröffentlichungstag der Anmeldung: **08.09.2021**
(21) Anmeldenummer: 21159943.6
(22) Anmeldetag: 01.03.2021
(51) Int. Cl.: F16K 31/00, G05D 23/02, F24D 19/10, F24D 17/00

(54) **THERMISCHES REGULIERVENTIL**

(30) Priorität: 03.03.2020 DE 202020000872 U
(71) Anmelder: Gebr. Kemper GmbH + Co. KG Metallwerke, 57462 Olpe (DE)
(72) Erfinder: Cordes, Paul, 57368 Lennestadt (DE)
(74) Vertreter: Grünecker Patent- und Rechtsanwälte PartG mbB

(57) **Zusammenfassung**

Die vorliegende Erfindung betrifft ein Regulierventil für Wasser-Zirkulationssysteme, aufweisend ein Ventilgehäuse (2) mit einem Eingangskanal (1) und einem Ausgangskanal (3), das zwischen dem Eingangskanal (1) und dem Ausgangskanal (3) einen Ventilsitz (4) ausbildet, ein Regelglied (36), das zur Regulierung einer Wasserdurchflussmenge relativ zu dem Ventilsitz (8) stellbar ist, und ein durch eine Wassertemperatur gesteuertes Dehnstoffelement (40) als Stellglied für das Regelglied (6). Die vorliegende Erfindung will ein verbessertes Regulierventil zur Regulierung des Wasserdurchflusses in Wasser-Zirkulationssystemen angeben und schlägt vor, dass ein in einem Regulierbetrieb an dem Ventilsitz (4) anliegender Ventilsitzkäfig (28) eine Durchflussöffnung (62) ausbildet, zu der das Regelglied (36) stellbar ist, das zur Voreinstellung eines Regulierspaltes (84) zwischen dem Regelglied (36) und dem Ventilsitzkäfig (28) um seine Stellachse (S) verschwenkbar ist.

## Beschreibung

Die vorliegende Erfindung betrifft ein Regulierventil mit den oberbegrifflichen Merkmalen von Anspruch 1. Ein solches Regulierventil ist aus DE 10 2005 038 699 B4 und DE 10 2006 059 577 B4 bekannt.

Das aus DE 10 2005 038 699 B4 vorbekannte Regulierventil ist zur Regulierung eines Wasserdurchflusses in Warmwasserleitungen mit Warmwasserzirkulation angepasst ausgebildet. In einem Ventilgehäuse des Regulierventils ist als Temperaturweggeber ein Dehnstoffelement vorgesehen, das einen Stößel in Abhängigkeit der Wassertemperatur relativ zu einem Ventilsitz stellt, der zwischen einem Eingangskanal und einem Ausgangskanal des Ventilgehäuses ausgebildet ist. Der Volumenstrom durch das Regulierventil kann ab einer von außen über ein Bedienelement einstellbaren Wassertemperatur auf einen Restvolumenstrom reduziert werden. Hierzu ist in dem Ventilsitz ein Ventilverschlussstück mit einer Einfließöffnung vorgesehen, mit der der Stößel zur Regulierung der Wasserdurchflussmenge zusammenwirkt. Das Ventilverschlussstück weist eine radial abgehende Ausfließöffnung auf, die mit einer von verschieden großen Durchflussöffnungen einer Einstellhülse in Überdeckung gebracht werden kann, die das Ventilverschlussstück umfänglich übergreift und gegenüber dem Ventilverschlussstück verdreht werden kann.

DE 10 2006 059 577 B4 bildet das aus DE 10 2005 038 699 B4 bekannte Regulierventil weiter, indem eine von außen zugängliche Einstellvorrichtung zum Drehen der Einstellhülse angegeben wird.

Die vorbekannten Regulierventile bieten Raum zur Verbesserung.

Eine Aufgabe der vorliegenden Erfindung ist es, ein verbessertes Regulierventil zur Regulierung des Wasserdurchflusses in Wasser-Zirkulationssystemen anzugeben.

Zur Lösung dieser Aufgabenstellung gibt die vorliegende Erfindung ein Regulierventil für Wasser-Zirkulationssysteme mit den Merkmalen von Anspruch 1 an.

Insbesondere ist auch das erfindungsgemäße Regulierventil zur Regulierung eines Wasserdurchflusses in Warmwasserleitungen mit Warmwasserzirkulation angepasst ausgebildet. Es kann grundsätzlich aber auch in Kaltwasserleitungen mit Kaltwasserzirkulation eingesetzt werden.

Das erfindungsgemäße Regulierventil zeichnet sich dadurch aus, dass ein in einem Regulierbetrieb an dem Ventilsitz anliegender Ventilsitzkäfig eine Durchflussöffnung ausbildet, zu der das Regelglied stellbar ist, das zur Voreinstellung eines Regulierspaltes zwischen dem Regelglied und dem Ventilsitzkäfig um seine Stellachse schwenkbar ist. Das Regelglied ist üblicherweise zwischen dem Dehnstoffelement und dem Ventilsitzkäfig angeordnet, zwischen denen sich auch die Stellachse des Regelglieds erstreckt. Als Regelglied ist meist ein länglicher Ventilkörper, wie beispielsweise ein Stößel, vorgesehen, der gegen das Dehnstoffelement unter Vorspannung angelegt ist. In an sich bekannter Weise dehnt sich das Dehnstoffelement bei steigender Temperatur gegen die Vorspannung aus und stellt das Regelglied in Richtung der Stellachse zu der Durchflussöffnung hin, sodass sich die Wasserdurchflussmenge durch die Durchflussöffnung verringert. Bei sinkender Temperatur zieht sich das Dehnstoffelement entsprechend zusammen und das Regelglied entfernt sich aufgrund der Vorspannung wieder von der Durchflussöffnung, sodass sich die Wasserdurchflussmenge durch die Durchflussöffnung wieder vergrößert. Zur Stabilisierung dieser Stellbewegung sind in dem Gehäuse in der Regel Mittel zur Führung des Regelglieds vorgesehen.

In einem Regulierbetrieb liegt der Ventilsitzkäfig an dem Ventilsitz an. Die Anlage ist für gewöhnlich derart, dass abgesehen von einer gegebenenfalls vorliegenden Leckageströmung zwischen den Anlageflächen des Ventilsitzkäfigs und des Ventilsitzes die gesamte Wasserdurchflussmenge durch die Durchflussöffnung des Ventilsitzkäfigs fließt. In dem Regulierbetrieb liegen die Wassertemperaturen in einem für Warmwasser-Zirkulationsleitung üblichen Bereich, vorzugsweise bei ca. 50-65°C. Die Position des Ventilsitzkäfigs erfährt im Regulierbetrieb keine Stellbewegung. Die Regulierung der Wasserdurchflussmenge erfolgt im Regulierbetrieb üblicherweise ausschließlich durch eine Stellbewegung des Regelgliedes.

Die Lage des Dehnstoffelements ist von außen durch eine Stellvorrichtung einstellbar. So kann von außen eine Wassertemperatur eingestellt werden, bei der das Regelglied in dem Regulierbetrieb an dem Ventilsitzkäfig anliegt und die Wasserdurchflussmenge auf einen Restvolumenstrom reduziert ist, der durch einen Regulierspalt zwischen dem Regelglied und dem Ventilsitzkäfig fließt. Die Größe des Restvolumenstroms ist in der Regel so gewählt, dass die Wärmeverluste der Warmwasserzirkulation ausgeglichen werden können. Dadurch wird zu jeder Zeit eine Zirkulation von Warmwasser gewährleistet, sodass kein Wasser in dem Warmwasser-Leitungssystem stehen und abkühlen kann.

Die Länge der jeweiligen Leitungen sowie die Gesamtgröße von Warmwasser-Zirkulationssystemen sind mitunter verschieden, sodass der geforderte Restvolumenstrom je nach Auslegung des Zirkulationssystems unterschiedlich ist. Der Restvolumenstrom ist daher mit dem erfindungsgemäßen Regulierventil durch Voreinstellung des Regulierspaltes einstellbar. Hierfür ist das Regelglied um seine Stellachse verschwenkbar. Die Konturen der Durchflussöffnung und des mit der Durchflussöffnung zusammenwirkenden axialen Endes des Regelgliedes sind dabei derart aufeinander abgestimmt, dass sich die Größe des Regulierspaltes durch Verschwenken des Regelgliedes um seine Stellachse verändert. D.h. das Regelglied verschließt die Durchflussöffnung unterschiedlich stark, je nachdem um welchen Winkel das Regelglied um seine Stellachse verschwenkt ist. Auf eine drehbare Einstellhülse, die mit dem in den Ventilsitz eingesetzten Ventilsitzkäfig zusammenwirkt und diesen außenumfänglich umgibt, kann gemäß der vorliegenden Erfindung verzichtet werden, da das Regelglied selbst zur Voreinstellung eines Regulierspaltes um seine Stellachse verschwenkbar ist.

Nach einer bevorzugten Weiterbildung der vorliegenden Erfindung ist der Regulierspalt durch Schwenken des Regelglieds stufenweise veränderbar. Die Konturen der Durchflussöffnung und des mit der Durchflussöffnung zusammenwirkenden axialen Endes des Regelgliedes sind dementsprechend vorzugsweise so aufeinander abgestimmt, dass jeweils einer von unterschiedlich großen Regulierspalten mit einem Winkelabstand zueinander durch Verschwenken des Regelgliedes um seine Stellachse freigegeben werden kann. In der Regel nimmt die Größe der Regulierspalte durch Schwenken des Regelgliedes in die eine Richtung zu und durch Schwenken des Regelgliedes in die andere Richtung ab. Weiter bevorzugt ist das Regelglied um im Wesentlichen 360° schwenkbar. Sehr bevorzugt ist das Regelglied drehbar. In diesem Fall ist die voranstehend beschriebene Relation zur Größenänderung des Regulierspaltes mit einer Ausnahme versehen, die an einer Stelle auftritt, die zwischen dem kleinsten und dem größten Regulierspalt liegt.

So kann mit dem erfindungsgemäßen Regulierventil zwischen mehreren Regulierspalten mit fest vorgegebener Größe umgeschaltet werden. Vorzugsweise ist jedem der Regulierspalte eine entsprechende Markierung an einer von außen bedienbaren Einstelleinrichtung zum Verschwenken des Regelgliedes, d.h. zur Voreinstellung des Regulierspaltes, zugeordnet. Weiter bevorzugt ist die Einstelleinrichtung in voneinander beanstandeten Winkelpositionen verrastbar, die den Winkelpositionen der Regulierspalte entsprechen.

Nach einer weiteren bevorzugten Weiterbildung der vorliegenden Erfindung wirkt das Regelglied zur Regulierung der Wasserdurchflussmenge mit einem Boden des Ventilsitzkäfigs zusammen, der die Durchflussöffnung aufweist. Der Regulierspalt ist dabei durch einen Teil der Durchflussöffnung gebildet, welcher bei an dem Boden anliegendem Regelglied nicht von dem Regelglied abgedeckt ist. Üblicherweise weist der Ventilsitzkäfig einen unteren Ring auf, der den Boden umfänglich umgibt und auf seiner Außenseite eine Dichtung trägt, die in dem Regulierbetrieb an dem Ventilsitz des Ventilgehäuses anliegt. Ein oberer Ring des Ventilsitzkäfigs nach dieser bevorzugten Weiterbildung ist über Stege mit dem unteren Ring verbunden. Das Regelglied ist durch den oberen Ring hindurchgeführt. Durch die Durchflussöffnung bzw. den Regulierspalt in den Ventilsitzkäfig einfließendes Wasser tritt für gewöhnlich durch mindestens eine der durch die Stege gebildeten Queröffnungen aus dem Ventilsitzkäfig wieder aus.

Zur Führung des Regelgliedes in Richtung seiner Stellachse ist üblicherweise eine Führungshülse vorgesehen, die in dem Ventilgehäuse gehalten und an einem freien Ende mit dem Ventilsitzkäfig verbunden ist und demnach den Ventilsitzkäfig trägt, wobei das Regelglied durch das freie Ende der Führungshülse hindurchgeführt ist. Das Regelglied ist in der Führungshülse verschieblich geführt und abgedichtet. Der Ventilsitzkäfig ist bevorzugt als separates Bauteil hergestellt und mit der Führungshülse verbunden, sodass eine verbreiterte Kappe, die an dem freien axialen Ende des Regelgliedes vorgesehen ist und mit einem Boden des Ventilsitzkäfigs zusammenwirkt, in dem Ventilsitzkäfig eingeschlossen ist.

Nach einer weiteren bevorzugten Weiterbildung der vorliegenden Erfindung ist das mit dem Boden zusammenwirkende axiale Ende des Regelgliedes konisch. Der Boden des Ventilsitzkäfigs ist nach dieser bevorzugten Weiterbildung ebenfalls konisch ausgebildet und bildet einen Gegenkonus zu dem freien konischen Ende des Regelgliedes. Damit kann eine verbesserte Anlage des Regelgliedes am Boden des Ventilsitzkäfigs erzielt werden. Des Weiteren wird dadurch das Festsetzen von Verunreinigungen und Schmutz in der Durchflussöffnung erschwert.

Nach einer weiteren bevorzugten Weiterbildung nach der vorliegenden Erfindung hat die Durchflussöffnung des Ventilsitzkäfigbodens ein Mittelloch, von welchem in radialer Richtung unterschiedlich große Schlitze abgehen. Liegt das Regelglied an dem Boden des Ventilsitzkäfigs an, können üblicherweise das Mittelloch und mit Ausnahme eines Schlitzes alle Schlitze von dem Regelglied abgedeckt werden. Der Regulierspalt wird demnach in der Regel durch den nicht abgedeckten oder zumindest nicht vollständig abgedeckten Schlitz gebildet. Das Mittelloch ist bevorzugt kreisförmig. Die Schlitze sind vorzugsweise rechteckig oder halbrund und unterscheiden sich in ihrer Länge und/oder Breite voneinander.

Nach einer weiteren bevorzugten Weiterbildung der vorliegenden Erfindung weist das konische Ende des Regelgliedes eine sich in der Regel von dem Umfang einer verbreiterten Kappe nach radial innen erstreckende Aussparung auf, die zur stufenweisen Einstellung des Regulierspaltes durch Verschwenken des Regelgliedes mit einem der Schlitze in Überlappung oder Überdeckung bringbar ist. Die Breite der Aussparung in Umfangsrichtung des Konus ist in der Regel größer als der kleinste Abstand zwischen zwei Schlitzen und nicht größer als der doppelte Abstand zwischen zwei Schlitzen. Damit gibt die Aussparung immer mindestens und höchstens einen der Schlitze vollständig oder zumindest und höchstens zwei Schlitze teilweise frei. Ein Absperren des Regulierventils durch Fehlbedienung der Einstelleinrichtung ist so nicht möglich. In der Regel ist die Einstelleinrichtung so einrastbar, dass die Aussparung immer genau einen der Schlitze freigibt.

Nach einer weiteren bevorzugten Weiterbildung der vorliegenden Erfindung ist der Ventilsitzkäfig in einem Desinfizierbetrieb zur thermischen Desinfektion des Regulierventils zumindest teilweise auf eine dem Dehnstoffelement gegenüberliegende Seite des Ventilsitzes bringbar. Dabei wird durch die Weggebung des Dehnstoffelementes bei sehr hohen Wassertemperaturen die Anlage des Ventilsitzkäfigs an dem Ventilsitz aufgehoben und eine Öffnung zum Wasserdurchfluss zwischen dem Ventilsitzkäfig und dem Ventilsitz freigegeben. Damit ist es möglich, trotz der bei hoher Wassertemperatur auf einen Restvolumenstrom reduzierten Wasserdurchflussmenge durch die Durchflussöffnung des Ventilsitzkäfigs das Regulierventil mit großem Volumenstrom zur thermischen Desinfektion und sehr hohen Wassertemperaturen zu durchspülen. Weiter bevorzugt ist der untere Ring des Ventilsitzkäfigs, der ein freies Ende des Ventilsitzkäfigs bildet und an seinem Außenumfang mit einer mit dem Ventilsitz zusammenwirkenden Dichtung, die vorzugsweise ein Dichtring ist, versehen ist, in dem Desinfizierbetrieb von dem Regelglied durch eine von dem Ventilsitz definierte Gehäusedurchgangsöffnung hindurchgedrückt. Bei einer sehr hohen Wassertemperatur, die der thermischen Desinfektion genügt (üblicherweise größer 65°C), nimmt das von dem thermischen Dehnstoffelement gestellte und an dem Boden des Ventilsitzkäfigs anliegende Regelglied den Ventilsitzkäfig mit und drückt diesen aus dem Ventilsitz heraus. Üblicherweise wird dabei auch die mit dem Ventilsitzkäfig verbundene Führungshülse entlang der Stellachse des Regelgliedes in Richtung des Ventilsitzes gedrückt.

Nach einer weiteren bevorzugten Weiterbildung der vorliegenden Erfindung weist das Regulierventil einen einstellbaren Anschlag auf, gegen den die Führungshülse unter Vorspannung einer ersten Feder anliegt, welche die Führungshülse in Richtung des Dehnstoffelements vorgespannt hält. Der Anschlag wird üblicherweise von einem in ein Ventiloberteil eingeschraubten Stellring gebildet, wobei das Ventiloberteil in eine Bohrung des Ventilgehäuses eingesetzt ist. Der Anschlag ist durch Einstellen der Einschraubhöhe des Stellrings einstellbar und wird von der unteren Fläche des Stellrings ausgeformt. In Richtung auf diese Fläche wird ein Kragen der Führungshülse von der ersten Feder gedrückt, die sich in dem Ventiloberteil abstützt. Die Federkraft der zweiten Feder ist so eingestellt, dass der Kragen der Führungshülse in dem Regulierbetrieb an der unteren Fläche des Stellrings anliegt. In dem Desinfizierbetrieb des Regulierventils wird die erste Feder aufgrund des an dem Boden des Ventilsitzkäfigs anliegenden Regelgliedes und des sich weiter ausdehnenden Dehnstoffelements gestaucht, denn die Führungshülse ist mit dem Ventilsitzkäfig verbunden, sodass der Kragen der Führungshülse von der unteren Fläche des Stellrings abhebt. Sinkt die Wassertemperatur nach der thermischen Desinfektion wieder, verkürzt sich das Dehnstoffelement, sodass der Kragen der Führungshülse wieder von der ersten Feder gegen den Anschlag gedrückt wird. Dadurch wird auch der Ventilsitzkäfig wieder in den Ventilsitz hineingezogen, d.h. in Richtung auf das Dehnstoffelement in den Ventilsitz eingebracht.

Nach einer weiteren bevorzugten Weiterbildung der vorliegenden Erfindung weist das Regulierventil eine zweite Feder auf, deren Federkraft kleiner als die der ersten Feder ist und die das Dehnstoffelement gegen die Führungshülse vorgespannt hält. Das Dehnstoffelement dehnt sich im Regulierbetrieb entgegen der Federkraft der zweiten Feder aus und verschiebt das Regelglied in der Führungshülse in Richtung der Stellachse zu der Durchflussöffnung des Ventilsitzkäfigs hin oder von der Durchflussöffnung weg. So ergibt sich im Regulierbetrieb die eingangs bereits beschriebene, von der Wassertemperatur abhängige, axiale Stellbewegung des Regelglieds zur Regulierung der Wasserdurchflussmenge. Die Federkräfte der ersten und der zweiten Feder sind dabei derart aufeinander abgestimmt, dass der Kragen der Führungshülse in dem Regulierbetrieb durch ein Ausdehnen das Dehnstoffelements nicht von dem Anschlag abhebt. Die Federkraft der zweiten Feder ist daher kleiner, als die der ersten Feder.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine Längsschnittansicht des Ausführungsbeispiels im Regulierbetrieb,
- Fig. 2: ein vergrößertes Detail der Längsschnittansicht des Ausführungsbeispiels im Desinfizierbetrieb,
- Fig. 3: eine Draufsicht von oben bis auf den Boden des Ventilsitzkäfigs bei weggenommenem Stößel, und
- Fig. 4: eine Schnittansicht des Ventilsitzkäfigs gemäß der Linie IV-IV der Darstellung in Figur 1.

Das Regulierventil des Ausführungsbeispiels hat ein Ventilgehäuse 2, das zwischen einem Eingangskanal 1 und einem Ausgangskanal 3 einen Ventilsitz 4 ausbildet. In dem Ventilsitz 4 ist ein unterer Ring 6 eines Ventileinsatzes 8 vorgesehen, wobei der Ring 6 in einem Regulierbetrieb des Regulierventils an dem Ventilsitz 4 anliegt.

Der Ventileinsatz 8 ist als vorgefertigtes Bauteil in das Ventilgehäuse 2 eingesetzt, und hat eine untere Baugruppe 10 und eine obere Baugruppe 12. Die untere Baugruppe 10 umfasst ein unteres Ventileinsatzgehäuse 14, das eine Aufnahme 16 ausbildet, in welcher ein Kragen 18 einer Führungshülse 20 zwischen zwei Anschlägen beweglich ist, wobei ein unterer Anschlag 21 durch das untere Ventileinsatzgehäuse 14 selbst ausgebildet wird und ein oberer Anschlag 22 durch die untere Fläche eines in das untere Ventileinsatzgehäuse 14 eingeschraubten Stellrings 24 ausgeformt wird. Das dem Ventilsitz 4 zugewandte Ende der Führungshülse 20 ist über einen Sprengring 26 mit einem Ventilsitzkäfig 28 verbunden, der an seinem freien Ende den unteren Ring 6 ausformt. Dieser untere Ring 6 des Ventilsitzkäfigs 28 ist über Stege 32 mit einem oberen Ring 34 verbunden, welcher zur Verbindung an der Führungshülse 20 den Sprengring 26 in sich aufnimmt.

Die Führungshülse 20 wird von einem Stößel 36 durchsetzt, der als Beispiel eines Regelglieds gemäß der Erfindung vorgesehen und der in axialer Richtung des Ventileinsatzes 8 und damit entlang einer Stellachse S beweglich geführt ist. Das freie untere Ende des Stößels 36 hat eine kegelstumpfförmige Kappe 37. Das gegenüberliegende Ende des Stößels 36 wirkt über einen Teller 38 mit einem Temperaturweggeber in Form eines Dehnstoffelementes 40 zusammen. Dieses Dehnstoffelement 40 ist in der oberen Baugruppe 12 aufgenommen. Die obere Baugruppe 12 hat ein oberes Ventileinsatzgehäuse 44, das über einen Sprengring 45 axial fest jedoch drehbar mit dem unteren Ventileinsatzgehäuse 14 verbunden ist. Die obere Baugruppe 12 hat ferner ein Überwurfgehäuse 46, welches das Dehnstoffelement 40 in sich einschließt und verdrehfest mit einem Bedienelement 48 verbunden ist. Ein Handrad 50 wirkt mit einer Spindel 51 zusammen, die das Dehnstoffelement 40 innerhalb der oberen Baugruppe 12 zur Änderung der Temperaturabhängigkeit des Regulierventils axial, d.h. entlang der Stellachse verschiebt. Das Bedienelement 48 ist vorliegend ein Anzeigering, der zusammen mit der Beschriftung des Handrades 50 die eingestellte Temperatur anzeigt.

Der Kragen 18 der Führungshülse 20 hat eine im Wesentlichen polygonale Außenumfangsfläche, die in einer entsprechend ausgeformten und die Aufnahme 16 umgebenen Innenumfangsfläche des unteren Ventileinsatzgehäuses 14 aufgenommen ist. So ist die Führungshülse 20 zwar axial, nicht aber rotatorisch in dem Ventileinsatz 8 beweglich.

Die obere Baugruppe 12 kann aufgrund der Verbindung über den Sprengring 46 relativ zu der unteren Baugruppe 10 verdreht werden. Allerdings sind beide Baugruppen 10, 12 axial gegeneinander festgelegt.

Der Ventileinsatz 8 weist eine obere Rückstellfeder 52 auf, die gegen eine dem Dehnstoffelement 40 zugewandte Oberfläche der Führungshülse 20 einerseits und gegen eine gegenüberliegende Unterfläche des Tellers 38 andererseits anliegt und den Teller 38 dementsprechend gegen den Temperaturwertgeber 40 unter Vorspannung anlegt. Der Ventileinsatz 8 hat eine untere Rückstellfeder 54, die in der Aufnahme 16 angeordnet ist und zwischen dem Boden der Aufnahme 16 und dem Kragen 18 der Führungshülse 20 unter Vorspannung gehalten ist. Unterhalb dieser unteren Rückstellfeder 54 ist die Führungshülse 20 gegenüber dem unteren Ventileinsatzgehäuse 14, gegenüber dem die Führungshülse 20 axial beweglich ist, über zwei Dichtringe 56 abgedichtet. Weitere Dichtringe 58 dichten den Stößel 36 gegenüber der Führungshülse 20 ab.

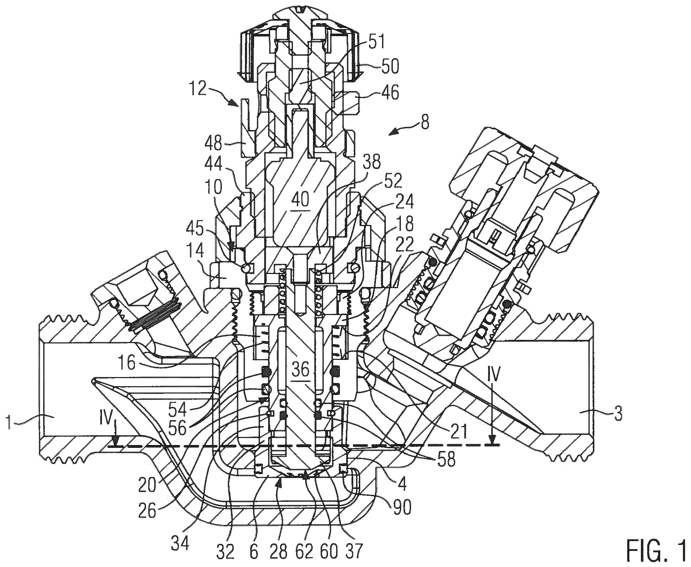

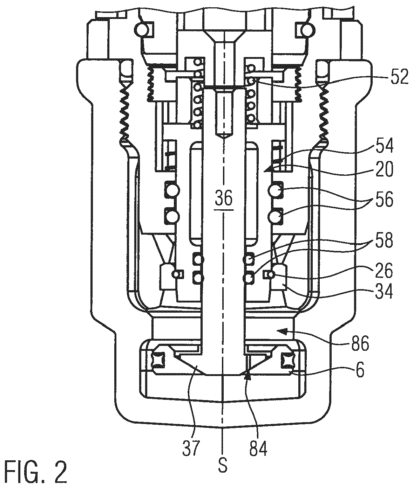

Die Rückstellkraft der unteren Rückstellfeder 54 ist größer als die Rückstellkraft der oberen Rückstellfeder 52. So führt ein Ausdehnen des Dehnstoffelementes 40 von der in Figur 1 gezeigten Ausgangsstellung zunächst dazu, dass sich der Stößel 36 in Richtung auf den unteren Ring 6 bewegt. Erst nach Anlage des Stößels 36 an den Boden 60 des Ventilsitzkäfigs 28, der von dem unteren Ring 6 umfänglich umschlossen ist, wird der Ventilsitzkäfig 28 zusammen mit der Führungshülse 20 mitgenommen. Diese Relativbewegung ergibt sich erst bei Temperaturen innerhalb des durch das Ventil vorgegebenen Strömungskanals für warmes Wasser im Bereich des Temperaturintervalls für die thermische Desinfektion (vgl. Figur 2). Bei einem Regulierbetrieb, d.h. Warmwassertemperaturen unterhalb der Temperatur für die thermische Desinfektion, wird allein der Stößel 36 durch das Dehnstoffelement 40 bewegt.

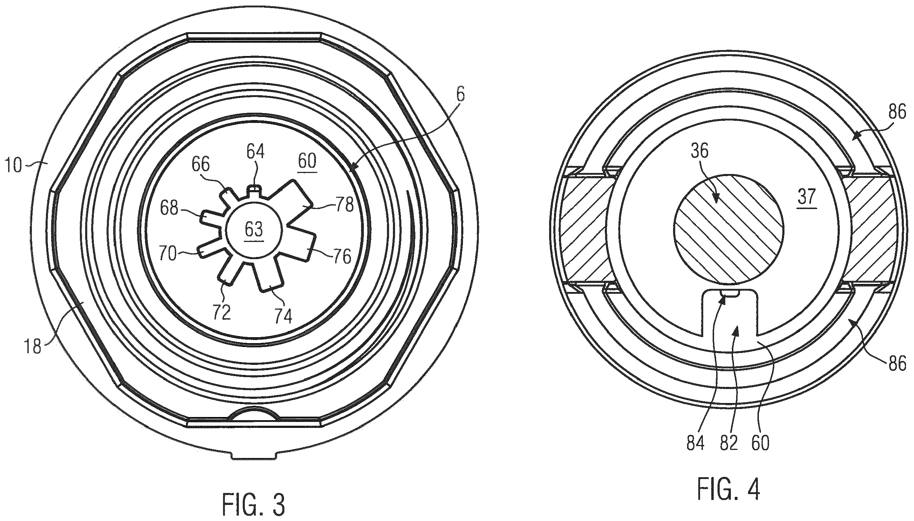

Die Figur 3 zeigt eine Draufsicht von oben auf das untere Ventilgehäuse bis auf einen Boden 60 des unteren Rings 6 ohne den Stößel 36. Dieser Boden 60 läuft korrespondierend zu der kegelstumpfförmigen Gestaltung des Stößels 36 konisch zu und hat eine Durchflussöffnung 62 die eine axiale Einlassöffnung für den Wasserstrom durch das Ventilgehäuse 2 ausbildet. An dem Umfang eines kreisförmigen Mittellochs 63 der Durchflussöffnung 62 verteilt sind mehrere sich radial erstreckende Schlitze 64-78 ausgespart, die das Mittelloch 63 abschnittsweise radial vergrößern.

Das freie verbreiterte und als Kappe 37 ausgebildete Ende des Stößels 36 hat eine im Wesentlichen scheibenförmige Querschnittsfläche, die an einem Umfangssegment mit einer sich nach radial innen erstreckenden Aussparung 82 versehen ist. Die Figur 4 zeigt eine Schnittansicht des Ventilsitzkäfigs 28 zusammen mit dem Stößel 36 auf Höhe der Stege 32 mit dem darunterliegenden Boden 60 des unteren Rings 6. Die Überdeckung zwischen der Aussparung 82 und vorliegend des Radialschlitzes 64 führt zu einem relativ kleinen Regulierspalt 84, der den Querschnitt zum Durchlassen eines Restvolumenstromes definiert. Der Restvolumenstrom wird auch dann durch die Durchflussöffnung 62 des Ventilsitzkäfigs 28 hindurchgelassen, wenn der Stößel 36 mit seiner Kappe 37 an dem Boden 60 anliegt und das Ventil thermisch gesteuert durch das Dehnstoffelement 40 geschlossen ist. Durch Verschwenken der oberen Baugruppe 12 relativ zu der unteren Baugruppe 10 kann die Aussparung 82 jeweils mit einem anderen der Radialschlitze 64-78 zur Überdeckung gebracht werden. Dadurch lässt sich die Größe des Regulierspaltes 84 und damit der Restvolumenstrom einstellen.

Ausgehend von der in Figur 1 gezeigten Ausgangsstellung ergibt sich bei einer Erwärmung des durch die Armatur fließenden Wassers ein Ausdehnen des Dehnstoffelements 40. Dadurch wird der Stößel 36 in Richtung auf den Ventilsitz 4 bzw. den an dem Ventilsitz 4 anliegenden Ventilsitzkäfig 28 verschoben. Selbst beim Anschlagen der Kappe 37 an den Boden 60 des unteren Rings 6 verbleibt der Regulierspalt 84 zwischen dem Ventilsitzkäfig 28 und dem Stößel 36 zum Durchlassen des Restvolumenstromes geöffnet. Bei weiterer Erwärmung des durch die Armatur strömenden Wassers führt eine weitere Dehnung des Dehnstoffelements 40 zum Vortreiben des Stößels 36, der den Ventilsitzkäfig 28 und die Führungshülse 20 gegen die Rückstellkraft der unteren Rückstellfeder 54 mitnimmt. Der untere Ring 6 wird schließlich aus dem Ventilsitz 4 auf der dem Dehnstoffelement 40 gegenüberliegenden Seite herausgeschoben, sodass zwischen den Stegen 32 vorgesehene und mit Bezugszeichen 86 gekennzeichnete Queröffnungen unterhalb und oberhalb des Ventilsitzes 4 freiliegen, wodurch eine thermische Desinfektion bei relativ hohen Volumenströmen durch die Armatur möglich wird (vgl. Figur 2).

### Bezugszeichenliste

- 1: Eingangskanal
- 2: Ventilgehäuse
- 3: Ausgangskanal
- 4: Ventilsitz
- 6: unterer Ring
- 8: Ventileinsatz
- 10: untere Baugruppe
- 12: obere Baugruppe
- 14: Ventileinsatzgehäuse
- 16: Aufnahme
- 18: Kragen
- 20: Führungshülse
- 21: unterer Anschlag
- 22: oberer Anschlag
- 24: Stellring
- 26: Sprengring
- 28: Ventilsitzkäfig
- 32: Stege
- 34: oberer Ring
- 36: Stößel
- 37: Kappe
- 38: Teller
- 40: Dehnstoffelement
- 44: oberes Ventileinsatzgehäuse
- 45: Strengring
- 46: Überwurfgehäuse
- 48: Bedienelement
- 50: Handrad
- 51: Spindel
- 52: obere Rückstellfeder
- 54: untere Rückstellfeder
- 56, 58: Dichtringe
- 60: Boden
- 62: Durchflussöffnung
- 63: Mittelloch
- 64- 78: Schlitze
- 82: Aussparung
- 84: Regulierspalt
- 86: Queröffnungen
- 90: Dichtring
- S: Stellachse

## Patentansprüche

1. Regulierventil für Wasser-Zirkulationssysteme, aufweisend ein Ventilgehäuse (2) mit einem Eingangskanal (1) und einem Ausgangskanal (3), das zwischen dem Eingangskanal (1) und dem Ausgangskanal (3) einen Ventilsitz (4) ausbildet, ein Regelglied (36), das zur Regulierung einer Wasserdurchflussmenge relativ zu dem Ventilsitz (8) stellbar ist, und ein durch eine Wassertemperatur gesteuertes Dehnstoffelement (40) als Stellglied für das Regelglied (6), **dadurch gekennzeichnet, dass** ein in einem Regulierbetrieb an dem Ventilsitz (4) anliegender Ventilsitzkäfig (28) eine Durchflussöffnung (62) ausbildet, zu der das Regelglied (36) stellbar ist, das zur Voreinstellung eines Regulierspaltes (84) zwischen dem Regelglied (36) und dem Ventilsitzkäfig (28) um seine Stellachse (S) verschwenkbar ist.

2. Regulierventil (2) nach Anspruch 1, **dadurch gekennzeichnet, dass** der Regulierspalt (84) durch Schwenken des Regelglieds (36) stufenweise veränderbar ist.

3. Regulierventil (2) nach Anspruch 1 oder 2, **dadurch gekennzeichnet, dass** das Regelglied (36) um im Wesentlichen 360° schwenkbar ist.

4. Regulierventil (2) nach einem der vorherigen Ansprüche, **dadurch gekennzeichnet, dass** das Regelglied (36) zur Regulierung der Wasserdurchflussmenge mit einem Boden (60) des Ventilsitzkäfigs (28) zusammenwirkt, der die Durchflussöffnung (62) aufweist, und dass der Regulierspalt (84) durch einen Teil der Durchflussöffnung (62) gebildet ist, welcher bei an dem Boden (60) anliegendem Regelglied (36) nicht von dem Regelglied (36) abgedeckt ist.

5. Regulierventil (2) nach Anspruch 4, **dadurch gekennzeichnet, dass** das mit dem Boden (60) zusammenwirkende Ende des Regelglieds (36) konisch ist und der Boden (60) einen Gegenkonus dazu bildet.

6. Regulierventil (2) nach Anspruch 4 oder 5, **dadurch gekennzeichnet, dass** die Durchflussöffnung (62) des Bodens (60) ein Mittelloch (63) hat, von welchem in radialer Richtung unterschiedlich große Schlitze (64, 66, 68, 70, 72, 74, 76, 78) abgehen.

7. Regulierventil (2) nach Anspruch 6, **dadurch gekennzeichnet, dass** das konische Ende des Regelglieds (36) eine sich nach radial innen erstreckende Aussparung (82) aufweist, die zur stufenweisen Einstellung des Regulierspalts (84) durch Verschwenken des Regelglieds (36) mit einem der Schlitze (64, 66, 68, 70, 72, 74, 76, 78) in Überlappung oder Überdeckung bringbar ist.

8. Regulierventil (2) nach einem der Ansprüche 4 bis 7, **dadurch gekennzeichnet, dass** der Ventilsitzkäfig (28) in einem Desinfizierbetrieb zur thermischen Desinfektion des Regulierventils (2) zumindest teilweise auf eine dem Dehnstoffelement (40) gegenüberliegende Seite des Ventilsitzes (4) bringbar ist.

9. Regulierventil (2) nach Anspruch 8, **dadurch gekennzeichnet, dass** ein an dem freien Ende des Ventilsitzkäfigs (28) vorgesehener Ring (6), der an seinem Außenumfang mit einer mit dem Ventilsitz (4) zusammenwirkenden Dichtung (90) versehen ist, in dem Desinfizierbetrieb von dem Regelglied (36) durch eine von dem Ventilsitz (4) definierte Gehäusedurchgangsöffnung hindurchgedrückt ist.

10. Regulierventil nach einem der vorherigen Ansprüche, **gekennzeichnet durch** eine Führungshülse (20), in der das Regelglied (36) verschieblich geführt und abgedichtet ist und die den Ventilsitzkäfig (28) trägt.

11. Regulierventil nach Anspruch 10, **gekennzeichnet durch** einen einstellbaren Anschlag (22) gegen den die Führungshülse (20) unter Vorspannung einer ersten Feder (54) anliegt, welche die Führungshülse (20) in Richtung des Dehnstoffelements (40) vorgespannt hält.

12. Regulierventil nach Anspruch 11, **gekennzeichnet durch** eine zweite Feder (52), deren Federkraft kleiner als die der ersten Feder (54) ist und die das Dehnstoffelement (40) gegen die Führungshülse (20) vorgespannt hält.
